# EUROPEAN PATENT APPLICATION

(11) **EP 4 644 888 A1**
(43) Date of publication of application: **05.11.2025**
(21) Application number: 23910603.2
(22) Date of filing: 26.12.2023
(51) Int. Cl.: G01N 23/10, G01N 23/046, G01N 23/207

(54) **INSPECTION EQUIPMENT, INSPECTION METHOD, AND INSPECTION SYSTEM**

(30) Priority: 30.12.2022 CN 202211738854
(71) Applicant: Tsinghua University, Haidian District, Beijing 100084 (CN); NUCTECH COMPANY LIMITED, Beijing 100084 (CN)
(72) Inventor: CHEN, Zhiqiang, Beijing 100084 (CN); ZHANG, Li, Beijing 100084 (CN); LI, Yuanjing, Beijing 100084 (CN); HUANG, Qingping, Beijing 100084 (CN); FENG, Bo, Beijing 100084 (CN); ZHANG, Liguo, Beijing 100084 (CN); LI, Guipei, Beijing 100084 (CN); HONG, Mingzhi, Beijing 100084 (CN)
(74) Representative: Gunzelmann, Rainer
(86) International application number: PCT/CN2023/141945
(87) International publication number: WO 2024/140680

(57) **Abstract**

Provided are an inspection device and an inspection method thereof, an inspection system. The inspection device includes: a transmission imaging apparatus for constructing a transmission image of an inspected object; and a diffraction detection apparatus for detecting characteristics of at least part of the inspected object. The transmission imaging apparatus defines an inspection channel. The inspection device includes a linear track spanning the inspection channel along a lateral direction. The diffraction detection apparatus is movable along the linear track to a specific position to detect radiations diffracted by at least part of the inspected object.

## Description

This application claims priority to Chinese Patent Application No. 202211738854.0, filed on December 30, 2022, the contents of which are incorporated herein by reference in its entirety.

### TECHNICAL FIELD

The present disclosure relates to the field of security inspection technologies, and in particular, to an inspection device, an inspection method, and an inspection system.

### BACKGROUND

The current security inspection devices may quickly inspect items without opening package or luggage.

The existing security inspection devices, such as advanced CT inspection devices, generally adopt ray transmission imaging. However, such devices still have the problem of capable of observing a general shape of a suspicious item without fully determining whether the suspicious item is prohibited.

Thus, more improved devices are required to more accurately determine whether an inspected object includes prohibited objects.

### SUMMARY

In an aspect of the present disclosure, an inspection device is provided, including: a bracket; a transmission imaging apparatus supported by the bracket and configured to construct a transmission image of an inspected object; and a diffraction detection apparatus supported by the bracket. The transmission imaging apparatus defines an inspection channel, and the inspected object is moved on the inspection channel to be scanned by the transmission imaging apparatus; and the diffraction detection apparatus includes a diffraction radiation detector configured to move on the bracket along a lateral direction of the inspection channel, to a specific position to receive a radiation diffracted by at least a part of the inspected object for detecting a characteristic of the inspected object.

In an embodiment, the inspection device further includes a track extending along a straight line, and the track is provided on the bracket and configured to span the inspection channel along a lateral direction of an extension direction of the inspection channel; and the diffraction radiation detector is supported by the track and configured to move along the track to receive and detect the diffracted radiation at the specific position.

In an embodiment, the diffraction detection apparatus and the transmission imaging apparatus include a common radiation source configured to irradiate a radiation towards the inspected object; or each of the diffraction detection apparatus and the transmission imaging apparatus includes a radiation source configured to irradiate a radiation towards the inspected object.

In an embodiment, a suspicious item included in the inspected object and a position of the suspicious item in the inspected object are determined based on the transmission image, and the diffraction radiation detector is moved to the specific position based on the position of the suspicious item so as to receive the radiation diffracted by the suspicious item for determining a characteristic of a suspicious item portion.

In an embodiment, the specific position is substantially located on an extension line of a virtual line connecting the radiation source and the suspicious item.

In an embodiment, the track includes a linear guide rail, the diffraction radiation detector includes a detector translation bracket, and the diffraction radiation detector is configured to move on the linear guide rail through the detector translation bracket.

In an embodiment, the inspection device further includes: an encoding motor and a lead screw, the encoding motor is configured to rotate the lead screw, so that the lead screw drives the detector translation bracket to move along the linear guide rail.

In an embodiment, the diffraction radiation detector further includes: a pivot shaft installed on the detector translation bracket, and a detector seat installed on the pivot shaft and supported by the pivot shaft, and the detector seat is configured to rotate relative to the detector translation bracket through a rotation of the pivot shaft, so as to adjust a pose of the diffraction radiation detector.

In an embodiment, the diffraction radiation detector includes an adjusting motor installed on the detector translation bracket, the pivot shaft includes an adjusting element, and the adjusting motor is engaged with the adjusting element to drive the pivot shaft to rotate a predetermined angle through the adjusting element.

In an embodiment, the adjusting motor is equipped with a driving gear, and the adjusting element is configured to mesh with the driving gear.

In an embodiment, the detector seat is rotated through the pivot shaft, so that a diffraction radiation receiving surface of the diffraction radiation detector faces the diffracted radiation.

In an embodiment, the transmission imaging apparatus includes a transmission radiation detector configured to receive a radiation transmitted through the inspected object for constructing the transmission image of the inspected object, the transmission radiation detector includes a plurality of detection units arranged in two rows, the detection units in each row are spaced apart from each other, and the detection units in the two rows form a continuous receiving surface relative to a projection direction of the radiation.

In an embodiment, adjacent detection units in the two rows overlap relative to the projection direction of the radiation.

In an embodiment, the transmission radiation detector is arranged along a straight line.

In an aspect of the present disclosure, an inspection method using the above-mentioned inspection device is provided, including: irradiating the inspected object using the radiation source; detecting a transmission radiation transmitted through the inspected object through the transmission radiation detector to construct the transmission image of the inspected object; identifying a suspicious item image portion corresponding to a suspicious item in the transmission image; determining a position of the suspicious item in the inspected object based on a position of the suspicious item image portion in the transmission image; and moving the diffraction detection apparatus to the specific position based on the position of the suspicious item in the inspected object, so as to detect a diffraction radiation from the suspicious item for determining a characteristic of the suspicious item.

In an embodiment, the moving the diffraction detection apparatus to the specific position, so as to detect a diffraction radiation from the suspicious item for determining a characteristic of the suspicious item includes: moving the diffraction radiation detector on a track so that the diffraction radiation detector is substantially located on an extension line of a virtual line connecting the radiation source and the suspicious item.

In an aspect of the present disclosure, an inspection system is provided, including: a CT inspection portion including a CT machine and configured to inspect whether a suspicious item is included in an inspected object; and a re-inspection portion including the inspection device of any one of claims 1 to 14 and configured to identify a composition of the suspicious item.

In an embodiment, after inspected by the CT inspection portion, the inspected object with no suspicious item is released, and the inspected object including the suspicious item is transferred to the re-inspection portion.

### BRIEF DESCRIPTION OF THE DRAWINGS

The accompanying drawings are for a better understanding of the present disclosure and do not constitute a limitation on the present disclosure, in which:
FIG. 1 shows a schematic front view of an inspection device according to an embodiment of the present disclosure.
FIG. 2 shows a schematic side view of an inspection device according to an embodiment of the present disclosure.

### DETAILED DESCRIPTION OF EMBODIMENTS

In order to clarify the purposes, technical solutions, and advantages of the present disclosure, the embodiments of the present disclosure will be described in detail below in conjunction with the accompanying drawings. It should be understood that the following descriptions of the embodiments are intended to explain and illustrate an overall concept of the present disclosure, and should not be construed as a limitation of the present disclosure. In the specification and drawings, the same or similar reference numerals refer to the same or similar components or members. For clarity, the accompanying drawings may not be drawn to scale, and some well-known components and structures may be omitted in the accompanying drawings.

Unless otherwise defined, the technical terms or scientific terms used in the present disclosure should have the general meanings understood by those skilled in the art. The terms "first", "second", and similar words used in the present disclosure do not indicate any order, quantity, or importance, but are only used to distinguish different components. The expression "a" or "one" does not exclude multiple options. The expression such as "including" or "containing" refer to the element or object that appear before the word includes the elements, objects and their equivalents listed after the word, without excluding other elements or objects. The expressions such as "connection" or "connected" are not limited to physical or mechanical connections, but may include electrical connections, whether direct or indirect. The expressions such as "up", "down", "left", "right", "top", or "bottom" are only used to represent relative positional relationships. When an absolute position of a described object changes, the relative positional relationships may also change accordingly. When an element such as a layer, a film, a region, or a substrate is referred to as being "above" or "below" another element, the element may be "directly" located "above" or "below" the another element, or there may be an intermediate element.

The present disclosure provides an inspection device including a transmission imaging apparatus and a diffraction detection apparatus. The transmission imaging apparatus is configured to irradiate a radiation towards an inspected object and construct a transmission image of the inspected object by inspecting the transmitted radiation. The diffraction detection apparatus is configured to irradiate a radiation towards the inspected object and detect a characteristic of at least a part of the inspected object by inspecting the radiation diffracted from the inspected object. In this embodiment, an inspection channel is defined in the transmission imaging apparatus, and the inspected object may be scanned by the transmission imaging apparatus through the inspection channel. The diffraction detection apparatus may move along a lateral direction of an extension direction of the inspection channel, such as moving to a specific position to detect the diffracted radiation. In the embodiments of the present disclosure, the diffraction detection apparatus may move to a specific position to complete a measurement of the diffracted radiation, so there is no need to arrange a row of diffraction detection detectors (in the lateral direction) spanning the inspection channel, which greatly reduces the cost of the device. In this embodiment, the diffraction detection apparatus includes a diffraction radiation detector, and the diffraction detection apparatus being movable to the specific position may refer to that, the diffraction radiation detector may move to the specific position to receive the diffracted radiation, thereby detecting the radiation diffracted by at least a part of the inspected object.

In an embodiment, the transmission imaging apparatus includes a transmission radiation detector configured to receive the radiation transmitted through the inspected object in order to construct the transmission image of the inspected object.

In this embodiment, the transmission imaging apparatus scans the inspected object located on the inspection channel and constructs the transmission image of the inspected object. A suspicious item portion in the transmission image is found by observing the transmission image (manual observation, or automatic detection by software using computer). Due to an irregular shape of the suspicious item, or an unclear image due to a composition of the suspicious item, the kind of the suspicious item portion may not be determined based solely on the transmission image, and a further detection is needed. At this time, a position of a suspicious item corresponding to the suspicious item portion in the inspected object is located based on the transmission image scanned by the transmission imaging apparatus, the diffraction detection apparatus is moved to a specific position to receive a radiation diffracted by the suspicious item, thereby detecting characteristics of the suspicious item, such as an atomic coefficient of the suspicious item, the composition of the suspicious item, etc., thereby determining whether the inspected object includes prohibited items without opening the package.

In this embodiment, the transmission imaging apparatus and the diffraction detection apparatus may be supported by a bracket 1. The transmission imaging apparatus is fixed on the bracket 1, and the diffraction detection apparatus is movable on the bracket 1. For example, the inspection channel extends along a first direction, while the diffraction detection apparatus may move along a second direction which is a lateral direction of the first direction.

In the embodiments of the present disclosure, each of the transmission imaging apparatus and the diffraction detection apparatus has a radiation source, for example, the diffraction detection apparatus has a radiation source, the transmission imaging apparatus has a transmission radiation source, and types of the two radiation sources may be the same or different as needed. The radiation source and the transmission radiation detector of the transmission imaging apparatus cooperate to complete transmission scanning, and the radiation source and the diffraction radiation detector of the diffraction detection apparatus cooperate to complete diffraction detection.

In another embodiment of the present disclosure, the transmission imaging apparatus and the diffraction detection apparatus may have a common radiation source.

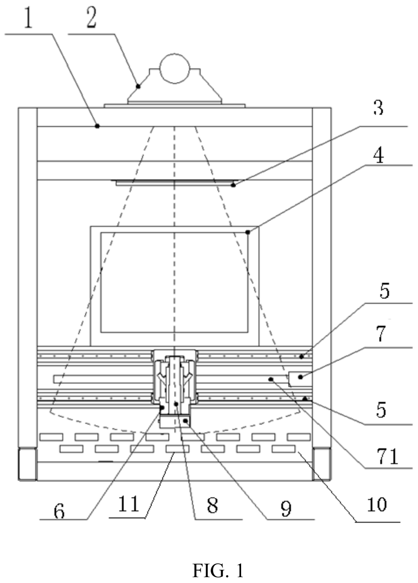

FIG. 1 shows an inspection device according to an embodiment of the present disclosure, including: a radiation source 2, a transmission radiation detector 10, and a diffraction radiation detector 9. The radiation source 2 may be a commonly used X-ray machine or other special X-ray sources. In this embodiment, the radiation source 2 may be a radiation source 2 shared by the transmission radiation detector 10 and the diffraction radiation detector 9. The transmission radiation detector 10 is configured to receive a radiation emitted by the radiation source 2, so as to construct a transmission image of the inspected object. The radiation source 2 and the transmission radiation detector 10 define an inspection channel 4 for the inspected object to pass through. The inspection channel 4 may be equipped with tools such as a conveyor belt, a conveyor track, and a cart, as well as fixed containers for placing or accommodating the inspected object. The inspected object on the inspection channel 4 may include bags, luggage, clear customs products, meat products, etc. The radiation emitted by the radiation source 2 may irradiate the inspected object on the inspection channel 4, and the radiation leaves after interacting with the inspected object. The radiation leaving the inspected object is received and detected by the transmission radiation detector 10. The radiation source 2, the transmission radiation detector 10, and the inspection channel 4 defined by the radiation source and the transmission radiation detector may be configured such that the inspected object is stationary or moving relative to the transmission radiation detector 10. In an embodiment where the inspected object is moving relative to the transmission radiation detector 10, the radiation may scan the inspected object, and the transmission radiation detector 10 may continuously receive the transmitted radiation, thereby constructing a complete transmission image of the inspected object or a transmission image of a scanned portion of the inspected object.

In an embodiment, the radiation source 2 and the transmission radiation detector 10 construct the transmission image of the inspected object by scanning the inspected object. The inspection device or operators may determine whether the inspected object includes a suspicious item from the obtained transmission image. For example, at border checkpoints, an inspected object (such as a person clear customs) may include a prohibited item such as drugs. When the inspected object passes through the inspection channel 4, a position of the suspicious item within the inspected object (such as the person) may be displayed on the transmission image.

In this embodiment, the diffraction radiation detector 9 is configured to receive a diffracted radiation in order to determine the characteristics of a substance causing diffraction.

The diffraction radiation detector 9 may receive a radiation diffracted at a specific diffraction angle from a substance, thereby measuring the characteristics of the substance by detecting the received radiation. The expression "specific position" used herein refers to the fact that the diffracted radiation may be detected by the diffraction radiation detector 9 at a specific position, while the characteristics of the radiation diffracted by a suspicious item portion cannot be detected (or a detected diffracted radiation signal from a target suspicious item portion is too weak to measure the characteristics of the suspicious item portion) at other positions. Herein, "characteristics" include an atomic coefficient or a composition of the substance. The technology for detecting the characteristics of substances based on the radiation diffracted by the substances is known, which will not be described in detail here. The diffraction radiation detector 9 in the present disclosure may operate using existing diffraction detection principles.

In an embodiment, the inspection device may further include a track 5 that spans the inspection channel 4 along a lateral direction of an extension direction of the inspection channel 4. The track 5 may be a slide rail or a rack with teeth. The diffraction radiation detector 9 may slide on the track 5 (such as a slide rail) or move on the track 5 (such as a rack) through meshing of teeth. The diffraction radiation detector 9 may move along the track 5 in various forms to receive and detect the diffracted radiation at the specific position. The track 5 shown in FIG. 1 is a linear guide rail, such as a double linear track 5.

Since the diffraction radiation detector 9 may span the inspection channel 4 on the linear track 5 to move to any desired position in the lateral direction of the inspection channel 4, it is possible to achieve measurement with one diffraction radiation detector 9 without the need to arrange a row of diffraction radiation detectors 9 spanning the inspection channel 4 to detect the diffracted radiation, greatly reducing the cost and complexity of the device.

In an embodiment of the present disclosure, the specific position may be located approximately on an extension line of a virtual line connecting the radiation source 2 and the suspicious item portion. Here, it should be understood that an intersection of the extension line and the track 5 is a position where the diffraction radiation detector 9 is located. In this embodiment, the radiation emitted by the radiation source 2 irradiates the inspected object, after being diffracted by the suspicious item portion of the inspected object, the radiation generally continues to propagate in a direction of the radiation source 2 irradiating the suspicious item portion. A radiation receiving surface of the diffraction radiation detector 9 receives the diffracted radiation. Here, the diffracted radiation is incident along a normal direction of the radiation receiving surface, meeting detection requirements of the diffraction detection apparatus (involving conditions such as diffraction angles that are well-known to those skilled in the art, which will not be discussed here). In other words, the diffraction detection apparatus facing the diffracted radiation refers to that the diffracted radiation is incident along the normal direction of the radiation receiving surface, thereby obtaining a best detection effect; otherwise the detection effect will deteriorate. In the embodiment shown in FIG. 1, the radiation source 2 is fixed, while the diffraction radiation detector 9 is configured to move in the lateral direction of the inspection channel 4, achieving diffraction monitoring of a cross-section of the inspected object spanned by the track 5.

As shown in FIG. 1, the inspection device includes an encoding motor 7 and a lead screw 71, which are used together to drive the movement and positioning of the diffraction radiation detector 9 on the track 5. The rotation of the lead screw is driven by the encoding motor 7, a rotation direction of the lead screw determines a movement direction of the diffraction radiation detector 9, and a number of rotations of the lead screw 71 determines a movement distance of the diffraction radiation detector 9. For example, a coordinate of the suspicious item in the lateral direction of the inspection channel 4 is represented by an x-coordinate, and a position of a vertical projection of the suspicious item on the inspection channel 4 in the extension direction of the inspection channel 4 is represented by a y-coordinate. In this way, when the suspicious item is spanned by the track 5, the number of rotations of the encoding motor 7 may be determined based on the x-position. Through a controlled rotation of the lead screw 71, the diffraction radiation detector 9 may move to the specific position to inspect the radiation diffracted by the suspicious item, thereby detecting the characteristics of the suspicious item.

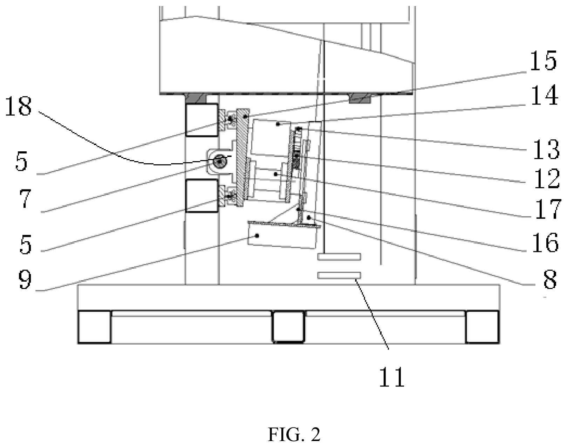

FIG. 2 shows a schematic side view of the diffraction radiation detector 9. The diffraction radiation detector 9 includes a detector translation bracket 15, and the diffraction radiation detector 9 moves on the linear guide rail through the detector translation bracket 15. The diffraction radiation detector 9 includes a pivot shaft 17 installed on the detector translation bracket 15 and a detector seat 16 installed on the pivot shaft 17 and supported by the pivot shaft 17. The detector seat 16 is configured to rotate relative to the detector translation bracket 15 through a rotation of the pivot shaft 17, thereby adjusting a pose of the diffraction radiation detector 9. The diffraction radiation detector 9 includes an adjusting motor 14 installed on the detector translation bracket 15, and the pivot shaft 17 includes an adjusting element 12. The adjusting motor 14 is engaged with the adjusting element 12 to drive the pivot shaft 17 to rotate a predetermined angle through the adjusting element 12. The adjusting motor 14 is equipped with a driving gear 13, and the adjusting element 12 is configured to mesh with the driving gear 13. The adjusting element 12 is shown as a half gear in FIG. 2, but it may be a full gear or a rack.

In FIG. 2, the detector translation bracket 15 of the diffraction radiation detector has a sleeve 18 at the bottom, which is sleeved on the lead screw 71. When the lead screw 71 rotates, the sleeve 18 is driven to move along the lead screw 71, whereby the detector translation bracket 15 is driven to move along the linear track 5. When the diffraction radiation detector 9 is moved to the specific position, the motor is driven to rotate a certain angle, thereby driving the pivot shaft 17 to rotate a certain angle through the driving gear 13 and the adjusting element 12 (half gear). The detector seat 16 rotates a certain angle along with the pivot shaft 17, so that a radiation detection surface of the diffraction radiation detector faces the diffracted radiation.

In the embodiments of the present disclosure, the transmission radiation detector 10 includes a plurality of detection units 11, which may be arranged along two rows, and the detection units 11 on each row are spaced apart from each other. The detection units 11 arranged in the two rows form a continuous receiving surface in the lateral direction of a projection direction of the radiation. Through such configuration, the plurality of detection units 11 may construct a two-dimensional transmission image of a cross-section of the inspected object by detecting the transmitted radiation. For example, if a suspicious item portion is found in the transmission image of the cross-section, the characteristics such as the composition or the atomic coefficient of the suspicious item portion may be further determined using the diffraction detection apparatus.

In the embodiments of the present disclosure, adjacent detection units 11 in two rows overlap relative to the projection direction of the radiation. Such configuration allows for a continuous detection image and a flexible arrangement of the plurality of detection units 11 at the same time, as well as a maintenance of a single detection unit 11 without the need to replace all the transmission detectors in a row (in a case where a row of transmission detectors is a whole). In the embodiment shown in FIG. 1, the plurality of detection units are arranged in two rows along a straight line.

In the embodiments of the present disclosure, the inspection device may include a bracket 1. As shown in FIG. 1, for example, the radiation source 2 may be provided at the top of the bracket 1, for example, fixed at the top of the bracket 1. In the embodiment shown in FIG. 1, the inspection channel 4 is illustrated as an inspection channel 4 with an enclosed structure, however, the inspection channel 4 may only represent a space defined by the transmission imaging apparatus. In an embodiment, the inspection channel 4 may be or equipped with a flat plate, a conveyor belt, or other apparatuses, and the inspected object may be conveyed to pass through the inspection channel 4, such as through a conveyor belt or through a container. The extension direction of the inspection channel 4 is, for example, a direction from an inside to an outside of a paper surface in FIG. 1. Spanning the inspection channel 4 refers to spanning the inspection channel 4 along the lateral direction of the paper surface, such as an arrangement of an arc-shaped track 5 spanning the inspection channel 4, as shown in FIG. 1.

In another embodiment, the radiation source 2 may be arranged at the bottom of the bracket 1, while the transmission radiation detector 10 and the diffraction radiation detector 9 (together with the track 5) are arranged at the top of the bracket 1, opposite to the radiation source 2 to receive radiation.

In this embodiment, the radiation source 2 is shared by the transmission imaging apparatus and the diffraction detection apparatus. However, in another embodiment, each of the transmission imaging apparatus and the diffraction detection apparatus is equipped with a radiation source. The transmission imaging apparatus and the diffraction detection apparatus are arranged at intervals in the extension direction of the inspection channel 4. The inspected object may move on the inspection channel 4 to be scanned by the transmission imaging apparatus, and then move to the diffraction detection apparatus to complete diffraction detection. The above description of moving the diffraction radiation detector 9 to the specific position corresponding to the suspicious item of the inspected object refers to a lateral movement spanning the inspection channel 4. At this time, for one scanning cross-section of the suspicious item of the inspected object, when diffraction inspection needs to be performed on another cross-section of the inspected object, the inspected object may be moved along the extension direction (outward or inward from the paper surface) of the inspection channel 4, and then the diffraction radiation detector 9 may be moved to the specific position corresponding to the suspicious item on the another cross-section for detection.

The detector translation bracket 156 may further include a rear collimator 8 for collimating the diffracted radiation, and the collimated radiation is received by the diffraction radiation detector 9. The bracket 1 may further include a front collimator 3 for collimating the radiation emitted from the radiation source 2. The front collimator 3 may have an adjustment function that may change an angle of radiation beams emitted from the front collimator 3, which will not be described in detail.

An aspect of the present disclosure provides an inspection method using the inspection device in the above-mentioned embodiments, and the method includes:
an inspected object is irradiated using a radiation;
a transmission image of the inspected object is constructed by detecting a transmission radiation transmitted through the inspected object;
a suspicious item image portion corresponding to a suspicious item in the transmission image is identified;
a position of the suspicious item in the inspected object is determined based on a position of the suspicious item image portion in the transmission image; and
the diffraction detection apparatus is moved to a specific position based on the position of the suspicious item in the inspected object, so as to detect a diffraction radiation from the suspicious item for determining characteristics of the suspicious item.

In an embodiment, the moving the diffraction detection apparatus to a specific position so as to detect a diffraction radiation from the suspicious item for determining characteristics of the suspicious item includes:
the diffraction radiation detector 9 is moved on a track 5, so that the diffraction radiation detector 9 is substantially located on an extension line of a virtual line connecting the radiation source and the suspicious item.

An aspect of the present disclosure provides an inspection system, including:
a CT inspection portion, including a CT machine and configured to inspect whether a suspicious item is included in an inspected object; and
a re-inspection portion, including the inspection device in any one of the above-mentioned embodiments and configured to identify a composition of the suspicious item. After inspected by the CT inspection portion, the inspected object with no suspicious item is released, and the inspected object with the suspicious item is transferred to the re-inspection portion.

In an embodiment, an inspection channel 4 defined by the re-inspection portion may be connected to the inspection channel 4 defined by the CT inspection portion. In another embodiment, the inspection channel 4 defined by the re-inspection portion may not be connected to the inspection channel 4 defined by the CT inspection portion.

When the inspected object passes through the CT inspection portion, the CT inspection portion may obtain a three-dimensional image of the inspected object, thereby enabling the inspection of whether a prohibited item is included in the inspected object without opening the package. When no prohibited item is included in the inspected object, the inspected object is released; when the three-dimensional image of the inspected object displays that the inspected object may include a prohibited item, that is, a part of the image is determined as an image of the suspicious item (which cannot be confirmed as a prohibited item yet), the inspected object will be transferred to the re-inspection portion. In the re-inspection portion, the inspected object is scanned by the transmission detection apparatus to determine the position of the suspicious item in the inspected object. Then, the diffraction detection apparatus may be moved to the specific position mentioned above to detect the suspicious item and determine the characteristics of the suspicious item, such as explosives, firearms, drugs, or others. In this embodiment, since the transmission detection apparatus is provided, it is possible to re-detect the inspected object, improving the accuracy of inspection, while at the same time, the position of the suspicious item in the inspected object is determined. Furthermore, the diffraction detection apparatus in this embodiment is movable, so there is no need to deploy diffraction detection units 11 or detectors spanning the inspection channel 4, which may reduce the number of diffraction detectors or sensors, lower the cost of an entire device and system, and achieve re-inspection without opening the package, improving the accuracy and efficiency.

The embodiments of the present disclosure have been described above. However, it should be understood that these embodiments are only examples and not all embodiments of the present disclosure, and are only for the purpose of demonstrating the principles of the present disclosure and not to limit the present disclosure. The descriptions of the above embodiments may have emphasis, but different embodiments may be combined based on the descriptions of the present disclosure to derive other embodiments of the present disclosure.

## Claims

1. An inspection device, comprising:
a bracket;
a transmission imaging apparatus supported by the bracket and configured to construct a transmission image of an inspected object; and
a diffraction detection apparatus supported by the bracket,
wherein the transmission imaging apparatus defines an inspection channel, and the inspected object is moved on the inspection channel to be scanned by the transmission imaging apparatus; and
wherein the diffraction detection apparatus comprises a diffraction radiation detector configured to move on the bracket along a lateral direction of the inspection channel, to a specific position to receive a radiation diffracted by at least a part of the inspected object for detecting a characteristic of the inspected object.

2. The inspection device according to claim 1,
wherein the inspection device further comprises a track extending along a straight line, and the track is provided on the bracket and configured to span the inspection channel along a lateral direction of an extension direction of the inspection channel; and
wherein the diffraction radiation detector is supported by the track and configured to move along the track to receive and detect the diffracted radiation at the specific position.

3. The inspection device according to claim 2,
wherein the diffraction detection apparatus and the transmission imaging apparatus comprise a common radiation source configured to irradiate a radiation towards the inspected object; or
wherein each of the diffraction detection apparatus and the transmission imaging apparatus comprises a radiation source configured to irradiate a radiation towards the inspected object.

4. The inspection device according to claim 3, wherein a suspicious item comprised in the inspected object and a position of the suspicious item in the inspected object are determined based on the transmission image, and the diffraction radiation detector is moved to the specific position based on the position of the suspicious item so as to receive the radiation diffracted by the suspicious item for determining a characteristic of a suspicious item portion.

5. The inspection device according to claim 4, wherein the specific position is substantially located on an extension line of a virtual line connecting the radiation source and the suspicious item.

6. The inspection device according to claim 2, wherein the track comprises a linear guide rail, the diffraction radiation detector comprises a detector translation bracket, and the diffraction radiation detector is configured to move on the linear guide rail through the detector translation bracket.

7. The inspection device according to claim 6, further comprising:
an encoding motor and a lead screw, the encoding motor is configured to rotate the lead screw, so that the lead screw drives the detector translation bracket to move along the linear guide rail.

8. The inspection device according to claim 7, wherein the diffraction radiation detector further comprises: a pivot shaft installed on the detector translation bracket, and a detector seat installed on the pivot shaft and supported by the pivot shaft, and the detector seat is configured to rotate relative to the detector translation bracket through a rotation of the pivot shaft, so as to adjust a pose of the diffraction radiation detector.

9. The inspection device according to claim 8, wherein the diffraction radiation detector comprises an adjusting motor installed on the detector translation bracket, the pivot shaft comprises an adjusting element, and the adjusting motor is engaged with the adjusting element to drive the pivot shaft to rotate a predetermined angle through the adjusting element.

10. The inspection device according to claim 9, wherein the adjusting motor is equipped with a driving gear, and the adjusting element is configured to mesh with the driving gear.

11. The inspection device according to claim 8, wherein the detector seat is rotated through the pivot shaft, so that a diffraction radiation receiving surface of the diffraction radiation detector faces the diffracted radiation.

12. The inspection device according to claim 2, wherein the transmission imaging apparatus comprises a transmission radiation detector configured to receive a radiation transmitted through the inspected object for constructing the transmission image of the inspected object, the transmission radiation detector comprises a plurality of detection units arranged in two rows, the detection units in each row are spaced apart from each other, and the detection units in the two rows form a continuous receiving surface relative to a projection direction of the radiation.

13. The inspection device according to claim 12, wherein adjacent detection units in the two rows overlap relative to the projection direction of the radiation.

14. The inspection device according to claim 12, wherein the transmission radiation detector is arranged along a straight line.

15. An inspection method using the inspection device of any one of claims 1 to 14, comprising:
irradiating the inspected object using the radiation source;
detecting a transmission radiation transmitted through the inspected object through the transmission radiation detector to construct the transmission image of the inspected object;
identifying a suspicious item image portion corresponding to a suspicious item in the transmission image;
determining a position of the suspicious item in the inspected object based on a position of the suspicious item image portion in the transmission image; and
moving the diffraction detection apparatus to the specific position based on the position of the suspicious item in the inspected object, so as to detect a diffraction radiation from the suspicious item for determining a characteristic of the suspicious item.

16. The inspection method according to claim 15, wherein the moving the diffraction detection apparatus to the specific position, so as to detect a diffraction radiation from the suspicious item for determining a characteristic of the suspicious item comprises:
moving the diffraction radiation detector on a track so that the diffraction radiation detector is substantially located on an extension line of a virtual line connecting the radiation source and the suspicious item.

17. An inspection system, comprising:
a CT inspection portion comprising a CT machine and configured to inspect whether a suspicious item is comprised in an inspected object; and
a re-inspection portion comprising the inspection device of any one of claims 1 to 14 and configured to identify a composition of the suspicious item.

18. The inspection system according to claim 17, wherein after inspected by the CT inspection portion, the inspected object with no suspicious item is released, and the inspected object comprising the suspicious item is transferred to the re-inspection portion.
